# DEMANDE DE BREVET EUROPEEN

(11) **EP 1 030 334 A1**
(43) Date de publication de la demande: **23.08.2000**
(21) Numéro de dépôt: 00400361.2
(22) Date de dépôt: 08.02.2000
(51) Int. Cl.: H01H 33/02, H02B 13/02, H02B 1/24

(54) **Module de disjoncteur auto-sectionneur, moyenne tension et poste de distribution d'énergie correspondant**

(30) Priorité: 15.02.1999 FR 9901779
(71) Demandeur: Alstom, 75116 Paris (FR)
(72) Inventeur: Starck, Thierry, 34 160 Castries (FR); Attack, Said, 34 070 Montpellier (FR)
(74) Mandataire: Gosse, Michel

(57) **Abrégé**

Le module comporte une enveloppe métallique (3) constituant un caisson blindé accueillant un disjoncteur multipolaire auto-sectionneur (1) où le sectionnement est réalisé par un basculement de l'ensemble des pôles (2), depuis une position de service où chaque pôle est simultanément relié à deux traversées de courant (4) saillant de part et d'autre de la paroi supérieure du caisson.

Le poste de distribution comporte une enveloppe métallique constituant un caisson blindé, divisé en compartiments qui permettent notamment de loger séparément trois disjoncteurs multipolaires auto-sectionneurs alignés parallèlement entre deux arrivées. Les pôles de ces disjoncteurs sont reliés entre eux par des traversées de courant au travers de compartiments intermédiaires dans chacun desquels aboutit un départ.

## Description

L'invention concerne un module de disjoncteur auto-sectionneur, moyenne tension, notamment pour installation à l'extérieur et un poste de distribution d'énergie correspondant.

Les modules de disjoncteur, moyenne tension, à isolement par air, pour installation à l'extérieur sont couramment constitués à partir d'unités de disjoncteur pour installation intérieure qui sont placées à l'intérieur d'une enveloppe de protection métallique et qui sont raccordées à des lignes électriques par l'intermédiaire de traversées de courant, de type air/air, montées dans des ouvertures d'une paroi formant toit de l'enveloppe. De tels modules disjoncteurs d'extérieur sont généralement associés à des sectionneurs qui sont situés à l'extérieur des enveloppes et qui permettent d'isoler les unités, pour accéder à leurs organes à des fins de maintenance ou de remplacement ou encore pour isoler les lignes de départ des lignes d'arrivée qui les alimentent. De telles associations présentent des dimensions et une complexité relativement importantes.

Le document FR-A-2683940 décrit une forme de réalisation d'un disjoncteur, moyenne tension, pour installation à l'extérieur, qui est auto-sectionneur. Le sectionnement est réalisé par un basculement des pôles entre une position où ces pôles sont électriquement reliés à des traversées de raccordement du disjoncteur et une position angulairement située à 90° où les pôles sont isolés des traversées.

Ce disjoncteur est incorporé dans un module comportant un tiroir support de disjoncteur dont l'extraction partielle est prévue pour permettre l'intervention du personnel d'exploitation pour maintenance et/ou remplacement. Il est plus particulièrement prévu de raccorder le disjoncteur auto-sectionneur à des conducteurs nus sous tension qui parviennent latéralement jusqu'au disjoncteur.

Ceci implique que le module soit installé en hauteur, sur un pylône, pour que les normes de sécurité soient respectées. Une telle solution présente des inconvénients sérieux en ce qui concerne la commande du disjoncteur et l'accès du personnel d'exploitation aux différents organes situés à l'intérieur du module qui le comporte.

L'invention propose donc un module de disjoncteur auto-sectionneur, moyenne tension, notamment pour installation au sol en extérieur et un poste de distribution d'énergie correspondant.

Le module de disjoncteur auto-sectionneur moyenne tension comporte un disjoncteur multipolaire auto-sectionneur connu où le sectionnement est réalisé par un basculement de l'ensemble des pôles autour d'un axe commun, depuis une position de service où chaque pôle est relié à deux pièces de connexion fixes du module par des pièces de connexion complémentaires fixées à ses propres extrémités, vers une position de sectionnement où les pièces de connexion complémentaires portées par les pôles sont déconnectées des pièces de connexion fixes, suite à une rotation partielle d'une poutre sur laquelle les pôles sont fixés, ledit module comportant aussi une enveloppe métallique dans laquelle le disjoncteur, porté par un chariot déplaçable, vient se loger.

Selon une caractéristique de l'invention, l'enveloppe métallique est constituée d'un caisson de blindage dont la partie supérieure forme un toit supportant des traversées de courant électriquement isolées du caisson, chaque traversée supportant sur son extrémité interne au caisson une des dites pièces de connexion fixes portée par le conducteur central de la traversée, ces pièces de connexion fixes étant toutes disposées sensiblement à même hauteur dans le caisson.

Selon une caractéristique de l'invention, le caisson de blindage constituant l'enveloppe métallique comprend sur sa face avant une ouverture d'accès pouvant être fermée, ouverture descendant au niveau du plancher métallique dudit caisson et dimensionnée de façon à permettre l'extraction totale du disjoncteur monté sur chariot.

Selon une caractéristique de l'invention, que le boîtier de commande du chariot est entièrement contenu dans l'enveloppe du module tout en restant accessible à un opérateur par l'ouverture du module.

Selon une caractéristique de l'invention, les traversées de courant rentrent dans le caisson selon une direction perpendiculaire localement à la surface du toit.

L'invention propose aussi un poste de distribution d'énergie, moyenne tension, de type un disjoncteur et demi, pour installation extérieure ou non.

Selon une caractéristique de l'invention, le caisson de blindage constituant l'enveloppe métallique de ce poste comprend six parois internes séparant sept compartiments dont trois permettent de loger séparément les trois disjoncteurs portés chacun sur un chariot mobile, lesquels sont reliés entre eux ainsi qu'aux arrivées de courant en position de service par l'intermédiaire de traversées de courant portées par les parois internes précitées, chaque compartiment comprenant sur sa face avant une ouverture d'accès pouvant être fermée descendant au niveau du plancher métallique de l'enveloppe et dimensionnée de façon à permettre l'extraction totale du disjoncteur en position de sectionnement verticale.

Selon une caractéristique de l'invention, que les deux compartiments d'extrémité du caisson que forme l'enveloppe métallique du poste peuvent recevoir chacun une traversée d'arrivée de courant provenant d'une ligne aérienne et traversant le plafond du caisson ou une arrivée par câbles traversant le bas du caisson, par exemple au niveau du plancher.

Selon une caractéristique de l'invention, les pôles de chaque disjoncteur reliés à une même phase de courant en position de service, les traversées de courant et leurs conducteurs centraux, ainsi que les conducteurs de liaison, forment un ensemble aligné à même hauteur dans le caisson de blindage du poste.

Selon une caractéristique de l'invention, les transformateurs de courant, de type torique, sont portés par les traversées de courant fixées sur les six parois internes du poste.

Selon une caractéristique de l'invention, le boîtier de commande de chacun des trois disjoncteurs sectionneurs est porté par le chariot mobile soutenant le disjoncteur et est entièrement contenu dans le compartiment fermé du disjoncteur tout en restant accessible à un opérateur par l'ouverture d'accès au compartiment.

L'invention, ses caractéristiques et ses avantages sont précisés dans la description qui suit en liaison avec les figures évoquées ci-dessous.
Les figures 1 et 2 présentent respectivement une coupe médiane transversale et une coupe médiane longitudinale d'un module de disjoncteur auto-sectionneur, selon l'invention.
La figure 3 présente un schéma électrique connu d'un poste de distribution d'énergie, de type un disjoncteur et demi.
La figure 4 présente un schéma de principe d'un poste de distribution blindé de type un disjoncteur et demi, selon l'invention.

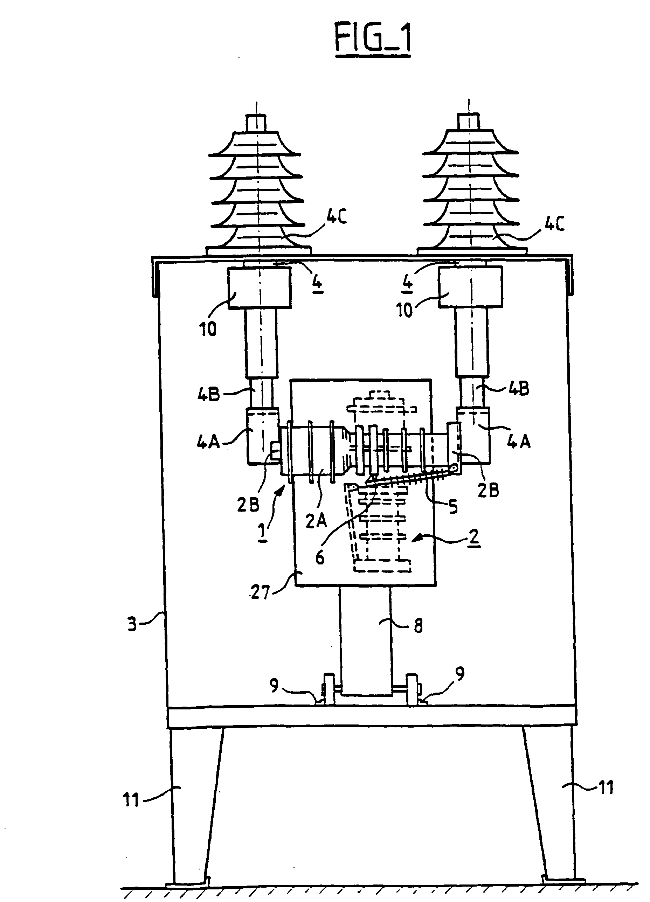

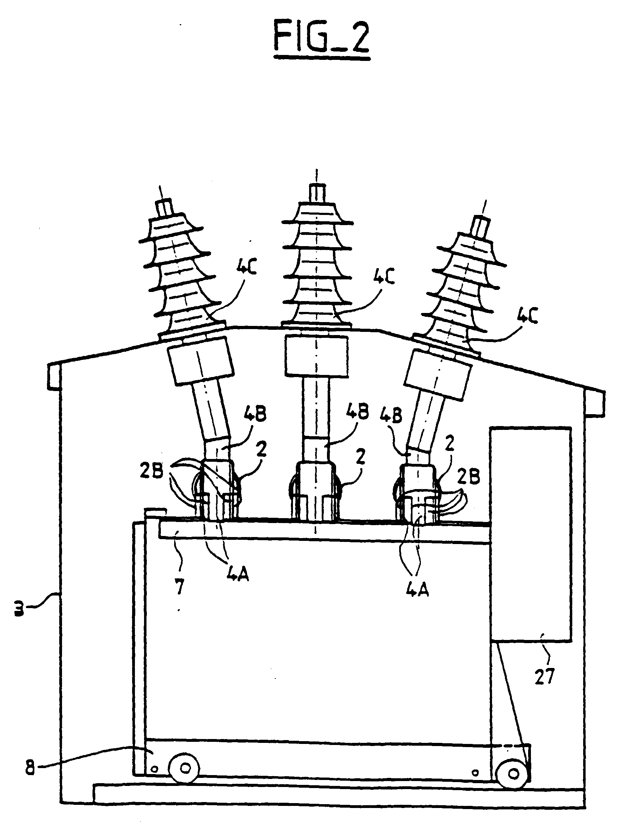

Le module de disjoncteur triphasé, moyenne tension, plus particulièrement pour installation à l'extérieur, présenté sur les figures 1 et 2 comporte essentiellement:
- un disjoncteur 1, auto-sectionneur, à trois pôles 2, où le sectionnement est réalisé par un basculement de l'ensemble des pôles; le basculement s'effectue entre une position de service où chaque pôle est relié à deux traversées de raccordement 4 par ses extrémités, et une position où ces pôles sont déconnectés des traversées, suite à une rotation partielle de la poutre 7 qui les porte, le disjoncteur étant identique ou similaire à celui décrit dans le document FR-A-2683940 ;
- une enveloppe métallique 3, de type caisson ouvrable, mis à la terre, dans lequel le disjoncteur 1 est logé;
- des pièces de connexion fixes ici portées par les traversées 4 par lesquelles les pôles du disjoncteur se raccordent aux conducteurs d'arrivée, tels que des fils de ligne, qui les alimentent et aux conducteurs de départ, usuellement de type câbles ou barres, desservant l'ensemble que protège le disjoncteur.

Chacun des pôles 2 comporte un corps tubulaire 2A, garni d'ailettes, réalisé en matériau isolant, par exemple en résine, dans lequel est logée une chambre de coupure, non représentée. Chaque chambre de coupure comporte un contact fixe et un contact mobile raccordés à des pièces de connexion 2B distinctes qui sont portées par le pôle à ses extrémités.

Chaque pièce de connexion 2B est apte à s'interconnecter avec une pièce de connexion complémentaire 4A, fixe et portée par le conducteur central 4B d'une traversée 4, lorsque les pôles du disjoncteur sont amenés en position horizontale de service. Les pièces de connexion sont par exemple du type pince embrochable et les contacts s'obtiennent par appui réciproque des pièces de connexion complémentaires d'un pôle et d'un conducteur central de traversée.

Les mouvements du contact mobile de chaque chambre de coupure sont ici supposés commandés par l'intermédiaire d'une tringlerie dont l'un des éléments externes constitué par une tige 5 est représenté. Comme connu, cette tringlerie permet d'agir sur le contact mobile de la chambre, lorsqu'elle est sollicitée par un arbre de commande 6, qui est logé dans une poutre d'articulation 7 sur laquelle les pôles du disjoncteur sont fixés et par la rotation de laquelle ils sont basculés.

Le basculement des pôles 2 et la commande du contact mobile de chaque chambre de coupure sont réalisés à partir d'un boîtier de commande 27. Ce boîtier contient notamment un mécanisme de mise en mouvement de l'arbre de commande 6, pour assurer des cycles d'ouverture et de fermeture des chambres de coupure, et un mécanisme pour assurer le basculement des pôles par une rotation de la poutre d'articulation 7, selon son axe longitudinal. Ce basculement est préférablement de 90°, comme illustré en pointillé sur la figure 1.

Dans la forme de réalisation envisagée, les pôles 2 du disjoncteur sont disposés horizontalement et l'un derrière l'autre, lorsqu'ils sont en position de service. Ils sont basculés verticalement, comme montré en pointillé sur la figure 1, lorsqu'ils sont sectionnés.

La poutre d'articulation 7 est montée sur un chariot de support 8, ici supposé à structure en U, aux extrémités duquel la poutre est articulée de manière que les pôles puissent basculer entre les jambages du U. Le boîtier de commande 27 est ici fixé perpendiculairement à une extrémité de la poutre. Le chariot de support est monté sur roues et il est guidé par au moins un rail 9 qui permet de déplacer le disjoncteur pour le positionner avec précision par rapport aux traversées ou, alternativement, pour le sortir hors de l'enveloppe 3 au travers d'une ouverture autrement prévue obturée, par exemple par une porte ou par un panneau.

Le positionnement précis prévu pour un disjoncteur par rapport aux traversées auxquelles il se raccorde est ici choisi de manière que les pièces de connexion 4A, respectivement portées par deux traversées 4 desservant une même phase, soient alignées à une distance correspondant à celles séparant les pièces de connexion complémentaires 2B, portées par le pôle 2 affecté à cette phase. Les pièces de connexion fixes portées par les traversées sont donc disposées en rangées parallèles, dont le nombre est égal au nombre de pôles du disjoncteur.

L'interconnexion par engagement réciproque entre les pièces de connexion 2B et 4A s'effectuent simultanément par glissement pour chacune des deux extrémités de chaque pôle, à la fin de la rotation ramenant les pôles en position horizontale.

A cet effet, les pièces de connexion 4A sont raccordées à une extrémité des conducteurs centraux 4B que comprennent longitudinalement les traversées 4.

Cette extrémité est celle qui se trouve dans l'enveloppe métallique 3 où le disjoncteur est logé, comme on le voit sur les figures 1 et 2. Chaque conducteur 4B est immobilisé, dans une ouverture ménagée dans la paroi supérieure de l'enveloppe 3 qu'il traverse, par l'intermédiaire du corps isolant 4C qui l'entoure et qui saille hors de l'enveloppe 3 pour former un conduit extérieurement garni d'ailettes. Les pièces de connexion 4A sont ici disposées à une même hauteur dans le caisson que définit l'enveloppe 3.

Lorsque le sectionnement du disjoncteur est réalisé par mise à la verticale des pôles, les pièces de connexion 2B de ces pôles sont à une distance diélectrique suffisante des pièces de connexion 4A des traversées pour permettre l'établissement d'une double distance de sectionnement du disjoncteur aux conducteurs respectifs du circuit amont et du circuit aval, entre lesquels ce disjoncteur est inséré.

Dans une forme préférée de réalisation, les traversées sont équipées de transformateurs de courant 10, toriques, ici montrés logés sur ces traversées à l'intérieur de l'enveloppe métallique 3, mais éventuellement montés à l'extérieur de celle-ci.

L'enveloppe métallique 3 d'un module de disjoncteur, selon l'invention, permet d'assurer un degré de protection entre l'intérieur et l'extérieur, elle peut être surélevée par rapport au sol par un piétement 11 à des fins de sécurité, comme présenté sur la figure 1. Le disjoncteur lui-même est susceptible d'être constitué de la manière décrite dans l'un ou l'autre des documents FR-A-2725830 et FR-A-2725843.

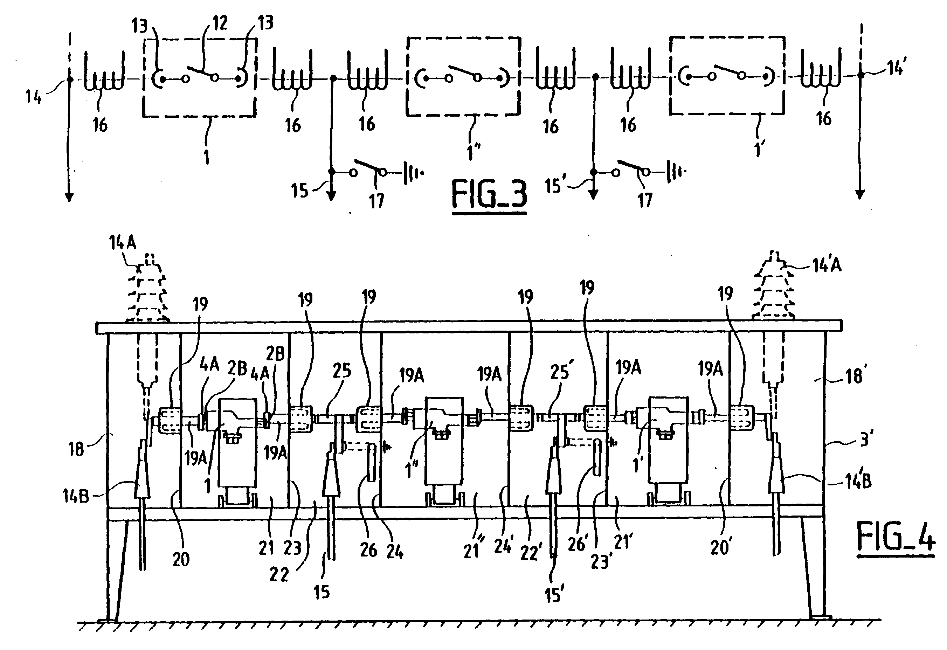

Il est également prévu de réaliser un poste, extérieur ou non et blindé, de distribution d'énergie, de type un disjoncteur et demi, utilisant un disjoncteur auto-sectionneur à sectionnement par pivotement des pôles du même type que celui utilisé par le module selon l'invention. Un tel poste est prévu pour permettre d'alimenter deux départs de câble distincts à partir de l'une ou l'autre des deux arrivées, selon le schéma électrique connu présenté sur la figure 3.

De manière générale, un poste de type un disjoncteur et demi comporte deux arrivées distinctes 14, 14' susceptibles d'être séparément alimentées en énergie par l'intermédiaire de liaisons polyphasées, ici supposées triphasées, constituées chacune par une ligne ou par des câbles dont les conducteurs de phase sont raccordés chacun à un disjoncteur auto-sectionneur d'arrivée 1 ou 1'.

Un disjoncteur auto-sectionneur du type de celui utilisé par l'invention peut être schématisé par un disjoncteur 12 de part et d'autre duquel sont disposés deux sectionneurs 13. En effet, chaque disjoncteur auto-sectionneur 1 ou 1' a la même fonction qu'un ensemble constitué d'un disjoncteur en amont et en aval duquel sont respectivement montés un sectionneur d'arrivée et un sectionneur intermédiaire.

Il est de même connu que dans un schéma électrique de type un disjoncteur et demi, un disjoncteur auto-sectionneur intermédiaire 1'' est inséré entre les deux disjoncteurs auto-sectionneurs 1 et 1'. Les câbles 15 et 15' respectivement prévus pour chacun des départs se raccordent entre les deux disjoncteurs auto-sectionneurs 1 et 1'', pour l'un des départs, et entre les deux disjoncteurs 1'' et 1', pour l'autre.

Des transformateurs de courant 16, de type torique, peuvent être montés à des fins de mesure et de gestion, de part et d'autre de chacun des disjoncteurs auto-sectionneurs 1, 1' et 1''.

Un sectionneur 17 est en général associé à chacun des départs pour permettre une mise à la terre des câbles 15 et 15'.

L'invention propose un poste de distribution, de type un disjoncteur et demi, réalisé avec des disjoncteurs auto-sectionneurs montés sur chariot mobile où le sectionnement est réalisé par pivotement des pôles, pouvant être du même modèle que le disjoncteur utilisé dans le module objet des revendications 1 à 4.

Le dispositif de l'invention est schématisé sur la figure 4.

Il est prévu de raccorder au poste des arrivées 14 et 14' qui peuvent être des arrivées de ligne aérienne rentrant dans le poste par des traversées de courant 14A, 14'A correspondant globalement aux traversées évoquées en liaison avec les figures 1 et 2. Ces traversées, représentées en pointillé, sont ici montées dans des ouvertures ménagées dans le plafond du caisson que forme une enveloppe métallique 3', aux extrémités de ce caisson qui contient les différents organes du poste. Les traversées desservant l'arrivée 14 sont alors à l'opposé du caisson par rapport aux traversées de l'arrivée 14'. Alternativement les arrivées 14 et 14' peuvent être des arrivées 14B, 14B' par câbles, ceux-ci parvenant alors aux extrémités de l'enveloppe métallique 3', au bas de celle-ci et par exemple au travers du plancher du caisson qu'elle forme, comme illustré en traits pleins sur la figure 4. Dans l'un ou l'autre cas, ces arrivées s'effectuent au niveau d'un compartiment d'extrémité 18 ou 18' où arrivent chacun des conducteurs d'alimentation correspondant à une des phases d'arrivée, soit chacun des trois conducteurs dans le cas usuel d'un poste triphasé. Il est prévu pour chacun des deux compartiments aux extrémités du caisson formé par l'enveloppe 3' une traversée de courant multifonctionnelle intermédiaire 19 pour permettre de relier chaque conducteur d'arrivée à un des disjoncteurs auto-sectionneurs 1 ou 1' suivant l'arrivée concernée. Cette traversée de courant multifonctionnelle 19 est par exemple du type de celle prévue dans le document FR-A-2709593.

Chacune des traversées multifonctionnelles d'extrémité est ici montée dans une ouverture prévue pour elle dans une paroi latérale intérieure 20 ou 20' qui sépare un compartiment d'extrémité d'un compartiment voisin réservé à l'un des disjoncteurs auto-sectionneurs 1 et 1' d'arrivée. Le disjoncteur auto-sectionneur intermédiaire 1'' est intercalé entre les disjoncteurs auto-sectionneurs d'arrivée 1 et 1' dans un compartiment 21'' central séparé de chacun des compartiments 21 ou 21' de ces disjoncteurs par un compartiment intermédiaire de départ 22 ou 22'.

Les trois disjoncteurs auto-sectionneurs 1, 1' et 1'' sont alignés dans le caisson entre les deux compartiments d'extrémité. Dans chaque compartiment, les divers organes propres à chaque phase, tels que les pôles, sont positionnés l'un derrière l'autre d'avant en arrière, perpendiculairement à l'alignement entre les trois disjoncteurs. Il en est de même pour les traversées multifonctionnelles 19 respectivement prévues pour chaque phase qui sont positionnées à même hauteur dans les cloisons de séparation entre compartiments successifs. Dans la forme de réalisation présentée, les traversées multifonctionnelles 19 sont principalement logées dans les compartiments d'extrémité ou dans les compartiments intermédiaires, au niveau des parois latérales séparant ceux-ci des compartiments contenant les disjoncteurs auto-sectionneurs. Le conducteur central 19A traversant chacune de ces traversées multifonctionnelles débouche alors dans chacun des deux compartiments séparés par la paroi latérale qui le porte.

Chacun de ces conducteurs centraux 19A est agencé pour s'interconnecter avec une des pièces de connexion 2B d'un pôle de disjoncteur auto-sectionneur 1 ou 1', d'une manière analogue à celle décrite pour la connexion d'une pièce de connexion 2B avec une pièce de connexion complémentaire 4A. Chacun des disjoncteurs auto-sectionneurs 1, 1' et 1'' permet donc de relier ensemble chacun des deux conducteurs centraux 19A, alignés qui pénètrent, chacun par un côté et au travers d'une paroi latérale différente 20, 20', 23, 23',24 ou 24' dans un des compartiments 21, 21' ou 21''. Dans la réalisation proposée, chacun des compartiments intermédiaires de départ 22 ou 22' est traversé par un élément conducteur de liaison 25 ou 25' reliant les conducteurs centraux 19A respectifs des deux traversées 19 qui sont alignées pour chaque phase et qui sont logées dans les parois de séparation 23 et 23' ou 23' et 24' délimitant ce compartiment.

Chacun des conducteurs de liaison 25 ou 25' est relié à un des câbles de départ 15 ou 15' qu'il permet d'alimenter à partir de l'une ou l'autre des arrivées 14 ou 14' suivant l'état des disjoncteurs auto-sectionneurs.

Des mesures en courant au niveau des arrivées et des départs du poste sont prévues réalisées par l'intermédiaire de transformateurs de courant de type torique implantés dans les diverses traversées multifonctionnelles 19 et/ou sur les traversées d'arrivée 14A, 14A' ou 14B, 14B' comportées par ce poste.

Un sectionneur 26 ou 26' est prévu monté sur une des parois latérales dans chaque compartiment intermédiaire de départ pour permettre la mise à la terre de chacun des trois câbles 15 ou 15' qui sont connectés chacun à un des conducteurs de liaison du compartiment et qui sont ici supposés entrer en bas de compartiment, par exemple au travers de son plancher.

Le poste de distribution ainsi constitué est ici montré logé dans un caisson qui le protège des intempéries et qui assure un degré de protection des organes qu'il contient vis-à-vis de l'extérieur, de même que pour le disjoncteur auto-sectionneur évoqué plus haut. La mise à la terre de l'enveloppe 3' du poste et des différentes parois de séparation permet d'obtenir une bonne sécurité d'exploitation du poste blindé ainsi réalisé. Les différents compartiments du caisson sont prévus avec chacun au moins une ouverture obturable qui est réalisée d'un même côté du caisson pour chacun et qui est fermée par une porte ou un panneau d'une manière classique, non représentée, pour permettre un accès aisé aux organes logés dans ces compartiments. Il est aussi prévu de disposer les éléments, nécessaires au personnel d'exploitation, pour la manoeuvre du poste d'un même côté du caisson qui constitue une face avant et qui permet de présenter un synoptique complet et continu de l'ensemble du poste.

L'agencement de poste, ainsi réalisé, autorise un gain de place important par rapport aux postes connus. Il permet d'obtenir un poste constitué sous forme d'un module unique qui est susceptible d'être monté et testé en usine avant installation, ce qui permet un gain de temps et de fiabilité, lors de celle-ci. Une sécurité d'exploitation améliorée peut être obtenue en raison de la possibilité d'implantation de mécanismes d'interverrouillage mécaniques entre organes à l'intérieur du caisson, au niveau des disjoncteurs auto-sectionneurs. Une accessibilité améliorée aux organes d'un disjoncteur auto-sectionneur d'un poste est aussi obtenue dans la mesure où l'extraction d'un de ces disjoncteurs devient possible, tout en maintenant les autres disjoncteurs du poste sous tension.

## Revendications

1. Module de disjoncteur auto-sectionneur, moyenne tension, pour installation au sol en extérieur, constitué d'une enveloppe métallique (3) renfermant un disjoncteur multipôle auto-sectionneur (1) porté par un chariot (8) déplaçable sur rails pouvant être bloqué en butée, le disjoncteur étant constitué d'une rangée de pôles parallèles entre eux et fixés sur une poutre commune de façon à croiser celle ci, la poutre étant parallèle à l'axe de pivotement des pôles, le sectionnement étant réalisé simultanément pour toutes les phases par pivotement de l'ensemble des pôles autour dudit axe, depuis une position de service sensiblement horizontale où chaque pôle relie deux pièces de connexion fixes (4A) d'une même phase du module par des pièces de connexion complémentaires (2B) fixées à ses propres extrémités, vers une position de sectionnement sensiblement verticale où ces pièces de connexion complémentaires sont déconnectées des pièces de connexion fixes suite à une rotation partielle de la poutre, caractérisé en ce que l'enveloppe métallique est constituée d'un caisson de blindage dont la partie supérieure forme un toit supportant des traversées de courant (4) électriquement isolées du caisson, chaque traversée supportant sur son extrémité interne au caisson une des dites pièces de connexion fixes (4A) portée par le conducteur central (4B) de la traversée, ces pièces de connexion fixes étant toutes disposées sensiblement à même hauteur dans le caisson.

2. Module de disjoncteur auto-sectionneur selon la revendication 1 caractérisé en ce que le caisson de blindage constituant l'enveloppe métallique (3) comprend sur sa face avant une ouverture d'accès pouvant être fermée, ouverture descendant au niveau du plancher métallique dudit caisson et dimensionnée de façon à permettre l'extraction totale du disjoncteur monté sur chariot (8).

3. Module de disjoncteur auto-sectionneur selon la revendication 2 caractérisé en ce que le boîtier de commande (27) du chariot est entièrement contenu dans l'enveloppe (3) du module tout en restant accessible à un opérateur par l'ouverture du module.

4. Module de disjoncteur auto-sectionneur selon l'une des revendications 1 à 3 caractérisé en ce les traversées de courant (4) rentrent dans le caisson selon une direction perpendiculaire localement à la surface du toit.

5. Poste de distribution d'énergie, moyenne tension, de type un disjoncteur et demi, c'est à dire renfermant trois disjoncteurs pour deux départs de courant, pour installation au sol en extérieur ou en intérieur, comportant une enveloppe métallique (3') formant caisson de blindage mis à la terre dans lequel sont alignés trois disjoncteurs autosectionneurs multipôles (1, 1' ,1''), chaque disjoncteur étant constitué d'une rangée de pôles parallèles entre eux et fixés sur une poutre commune de façon à croiser celle ci, la poutre étant parallèle à l'axe de pivotement des pôles, le sectionnement étant réalisé simultanément pour toutes les phases par pivotement de l'ensemble des pôles autour dudit axe, depuis une position de service horizontale où chaque pôle relie deux pièces de connexion fixes (4A) d'une même phase du module par des pièces de connexion complémentaires (2B) fixées à ses propres extrémités, vers une position de sectionnement verticale où ces pièces de connexion complémentaires sont déconnectées des pièces de connexion fixes suite à une rotation partielle de la poutre, caractérisé en ce que le caisson de blindage constituant l'enveloppe métallique (3) comprend six parois internes (20,20',23,23',24,24') séparant sept compartiments dont trois permettent de loger séparément les trois disjoncteurs (1, 1',1'') portés chacun sur un chariot mobile, lesquels sont reliés entre eux ainsi qu'aux arrivées de courant (14A,14A' ou 14B,14B') en position de service par l'intermédiaire de traversées de courant (19) portées par les parois internes précitées, chaque compartiment comprenant sur sa face avant une ouverture d'accès pouvant être fermée descendant au niveau du plancher métallique de l'enveloppe (3') et dimensionnée de façon à permettre l'extraction totale du disjoncteur en position de sectionnement verticale.

6. Poste de distribution d'énergie selon la revendication 5 caractérisé en ce que les deux compartiments d'extrémité (18,18') du caisson que forme l'enveloppe métallique 3' peuvent recevoir chacun une traversée d'arrivée de courant (14A,14'A) provenant d'une ligne aérienne et traversant le plafond du caisson ou une arrivée (14B, 14B') par câbles traversant le bas du caisson.

7. Poste de distribution d'énergie selon l'une des revendications 5 à 6 caractérisé en ce que les pôles de chaque disjoncteur reliés à une même phase de courant en position de service, les traversées de courant (19) et leurs conducteurs centraux 19A, ainsi que les conducteurs de liaison (25,25'), forment un ensemble aligné à même hauteur dans le caisson de blindage du poste.

8. Poste de distribution d'énergie selon l'une des revendications 5 à 7 caractérisé en ce que les transformateurs de courant, de type torique, sont portés par les traversées de courant (19) fixées sur les six parois internes (20,20',23,23',24,24') du poste.

9. Poste de distribution d'énergie selon l'une des revendications 5 à 8 caractérisé en ce que le boîtier de commande de chacun des trois disjoncteurs sectionneurs est porté par le chariot mobile soutenant le disjoncteur et est entièrement contenu dans le compartiment fermé du disjoncteur tout en restant accessible à un opérateur par l'ouverture d'accès au compartiment.
